# EUROPEAN PATENT SPECIFICATION

(11) **EP 3 596 336 B1**
(45) Date of publication and mention of the grant of the patent: **02.03.2022**
(21) Application number: 17901128.3
(22) Date of filing: 13.03.2017
(51) Int. Cl.: F03B 13/18, A01K 61/70, E02B 9/08, E02B 3/06

(54) **ARRANGEMENT AND METHOD FOR ENHANCING CONDITIONS OF VARIOUS TYPES IN A COASTAL AREA**
ANORDNUNG UND VERFAHREN ZUR VERBESSERUNG VON KONDITIONEN VERSCHIEDENER ART IN EINER KÜSTENREGION
AGENCEMENT ET PROCÉDÉ POUR AMÉLIORER DES CONDITIONS DE DIVERS TYPES DANS UNE ZONE CÔTIÈRE

(43) Date of publication of application: 22.01.2020
(73) Proprietor: AW-Energy Oy, 01380 Tikkurila (FI)
(72) Inventor: MUCHA, Tomasz, 02760 Espoo (FI); PARONEN, Essi, 33410 Tampere (FI); KOIVUSAARI, Rauno, Puerto Montt (CL); JÄRVINEN, Arvo, 01230 Vantaa (FI); RIDGEWELL, Christopher, 00170 Helsinki (FI)
(74) Representative: Salomäki, Juha Kari Ensio
(86) International application number: PCT/FI2017/050162
(87) International publication number: WO 2018/167350

(56) References cited:
- WO-A1-98/17911
- WO-A1-2015/104445
- WO-A1-2015/104445
- WO-A1-2016/129107
- GB-A- 2 490 515
- KR-A- 20090 017 710
- KR-A- 20090 017 710
- US-A- 4 824 284
- US-A- 5 543 034
- US-A1- 2015 204 302
- US-A1- 2015 204 302
- US-A1- 2016 290 311
- US-A1- 2016 290 311

## Description

The present invention relates to an arrangement for enhancing conditions of various types in a coastal area as defined in the preamble of claim 1 and a method for enhancing conditions of various types in a coastal area as defined in the preamble of claim 14.

In prior art technology wave energy apparatuses are usually not used for other tasks than only capturing wave energy and converting it into other type of energy.

Patent publications US2016/290311 A1,

US7131269 B2, EP16231101 B1 and WO 007125156 A1 are good examples of the solutions of this kind. Wave energy apparatuses are also used for desalination of seawater. Patent publications AU2010366071 B2 and US7023104 B2 are examples of the solutions of this kind. Whereas a control and driving arrangement of a wave energy apparatus is presented in the US patent No US9279408 B2, and a tidal adjustment is presented in the US patent No. US9109570 B2. If other tasks in the coastal area are needed to be done separate apparatuses for these purposes are usually used.

US patent publication No. US4691661 presents a self-adjusting artificial breakwater for artificial harbors. The artificial breakwater of the US patent comprises a group of extensible and flexible bags of which a major part is to be submerged below the surface of the sea. Each bag is anchored to the bottom of the sea and filled mostly with water and partly by air, whereby at least a part of the air filled portion extends above the surface of the sea. When deployed the bag takes the form of a wedge in its cross section. A disadvantage of this solution is that it can be used only for one purpose. It does not work, for example, as a wave energy capturing and converting apparatus.

US patent publication No. US2015/0091304 A1 presents an energy-capturing floating breakwater. The solution of the US publication comprises a frame with an up and down moving asymmetrical floating body that is coupled to a permanent magnet linear generator that serves as a power take off system. In addition to convert wave energy to electric energy the apparatus is mentioned to serve as a breakwater. A problem with this solution is that it is not equipped to serve other than in the two tasks mentioned above.

The arrangement according to the invention is suited very well for instance to be used in connection with reciprocating panels or flaps or essentially plate-like wing elements, later called shorter only as flaps. The flaps are hinged with their lower edge to make a reciprocating movement caused by wave energy or tidal energy of seawater. The wave energy or tidal energy collected is further converted with a conversion unit for instance to electric energy, fresh water, pressure or hydrogen. For the sake of simplicity, only the term wave energy is later mentioned when both the wave energy and the tidal energy of seawater are meant.

The object of the present invention is to eliminate the drawbacks of the prior art technology described above and to achieve an arrangement, which in addition to the conversion tasks mentioned above is equipped with various accessory equipments to make the arrangement act in various tasks for enhancing conditions of various types in a coastal area. In that case the arrangement is equipped to work as a breakwater, an artificial reef by providing holes, pockets and/or hollow areas for sea animals and sea plants to use, a pump to transfer pure water from the deeper water area to shallower water area, a mechanism to transform waves of an irregular form into waves of a regular form and to dampen the load of waves towards the shore and surroundings, an apparatus to provide waves for surfing, an apparatus to reduce or remove the concentration of PCB in the bottom of the surrounding water area, a mechanism to produce pressurized hydrogen and/or oxygen, an apparatus to produce a warning signal to warn an object moving near the arrangement either under or above the water surface, to provide a substrate for marine growth. The arrangement for enhancing conditions of various types in a coastal area is characterized by what is presented in the characterization part of claim 1, and the method for enhancing conditions of various types in a coastal area is characterized by what is presented in the characterization part of claim 14. Other embodiments of the invention are characterized by what is presented in the other claims.

In order to achieve the objectives of the present invention, the present invention provides an arrangement according to the appended claim 1.

The arrangement according to the invention has a number of advantages. One of the advantages is that the same arrangement with appropriate accessory equipments can act in various tasks for enhancing conditions of various types in a coastal area. In addition to produce electric energy or fresh water the same arrangement can act as a breakwater; can protect the neighboring beach from erosion or at least may minimize beach erosion; can act as artificial reef for sea animals and sea plants; can act as a pump for pumping pure water from deeper areas to the shoreline or pumping water into fountains for entertainment use; can act as a wave transformer by making waves smoother, weaker and more regular, and by changing the direction of travel of the waves; can act as wave producer for surfing in the beach area; can act as PCB remover; can act as a producer of pressurized hydrogen and/or oxygen; can act as a bioflap or biopanel having a substrate for marine growth; and also can comprise various warning systems, for example to give a warning signal if a sea animal, swimmer, surfer, boat or ship is coming too close to the reciprocating flaps. The appropriate accessory equipments are easy to install and are not expensive. In some cases they make the arrangement even more economical. For, instance when the flap is arranged to act as a biopanel the basic structure of the reciprocating flap can be lighter and cheaper because the renewable marine growth forms automatically and continually a part of the flap.

In the following, the invention will be described in detail by the aid of examples by referring to the attached simplified and diagrammatic drawings, wherein
- Fig. 1: presents in a simplified top view an arrangement according to the invention, where individual actuating mechanisms are placed in a wanted place and position related to each other and to the neighboring coastal area,
- Fig. 2: presents in a simplified oblique top view a actuating mechanism used in the arrangement according to the invention,
- Fig. 3: presents in a side view and in a simplified and diagrammatic way a actuating mechanism used in the arrangement according to the invention transforming waves of an irregular form into waves of a regular form and dampening the load of waves towards the shore and surroundings,
- Fig. 4: presents in a side view and in a simplified and diagrammatic way a actuating mechanism used in the arrangement according to the invention providing waves for surfing, and
- Fig. 5: presents in a front view and in a simplified and diagrammatic way an actuating mechanism used in the arrangement according to the invention, where the reciprocating flap of the apparatus is formed naturally to cover the support frame of the flap.

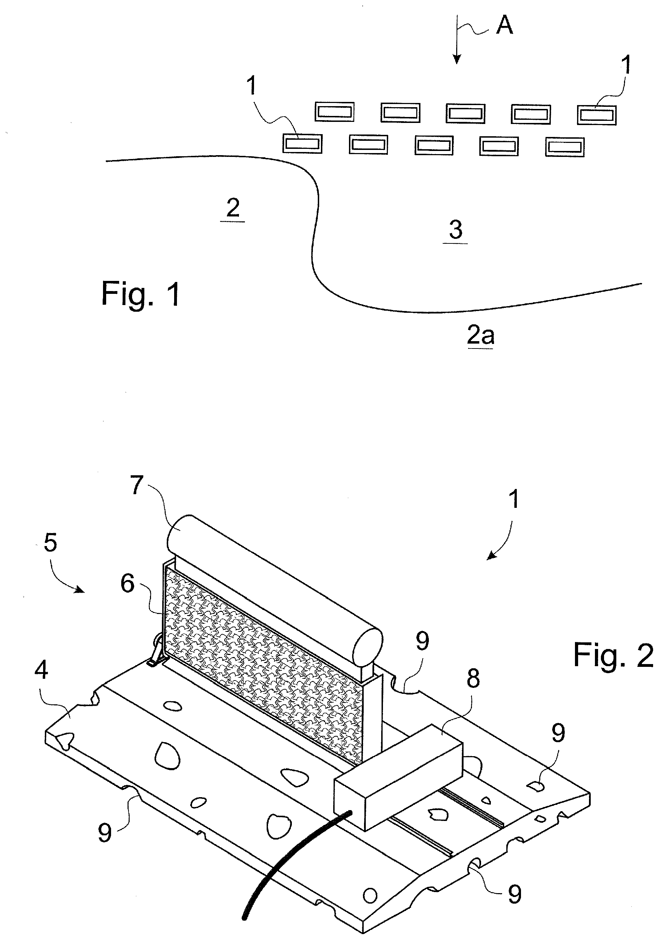

Figure 1 presents in a simplified top view an arrangement according to the invention, where individual actuating mechanisms 1 are placed in a wanted area and in a wanted position related to each other and related to the neighboring coastal area 2. The neighboring coastal area 2 comprises, for example a harbor area 2a and water area 3 to be protected in front of the harbor area 2a. The waves towards the harbor area 2a come mainly from the open sea in the direction of the arrow A. The individual actuating mechanisms 1 are placed, for instance in two rows as presented in figure 1. In this case the first row of actuating mechanisms 1 is closer to the shoreline and comprises a number of actuating mechanisms 1 placed end to end in a wanted distance from each other. Preferable the row is straight or substantially straight. In particular cases the row also can be curvilinear or otherwise non-straight. The second row of actuating mechanisms 1 is farther from the shoreline than the first row and preferably placed behind the first row so that the actuating mechanisms 1 of the second row cover caps between the end of the actuating mechanisms 1 of the first row. Thus, the actuating mechanisms 1 of the first row and the actuating mechanisms 1 of the second row together form a substantially continuous wave breaking wall between the open sea and the shoreline.

The actuating mechanisms 1 are wave energy recovery apparatuses equipped appropriately with various actuating means to perform other tasks in addition to their main task to capture wave energy and to convert it into other forms of energy or to use wave energy for desalination.

The number of rows of the actuating mechanisms 1 can be different from the two mentioned above. The number of rows can be only one, or three, four five or even more. In addition the placing of the actuating mechanisms 1 can be different, for instance without any rows the actuating mechanisms 1 have been placed in various locations adjacent to each other and/or behind each other so that the whole area of the actuating mechanisms form a substantially continuous wall between the open sea and the shoreline.

Figure 2 presents in a simplified oblique top view a actuating mechanism 1 used in the arrangement according to the invention. The actuating mechanism 1 comprises at least a base 4 anchored onto the bottom of the sea, a panel or flap 5 reciprocating about its pivot shaft 5b, and a power-take-off (PTO) unit 8 having a connection mechanism to connect the PTO unit 8 to the pivot shaft 5b of the reciprocating flap 5. The PTO unit 8 is arranged to transfer a reciprocating motion of the flap 5 mechanically to the PTO machinery that can be, for instance, a machinery converting wave energy to electric energy or using wave energy to produce fresh water or hydrogen, etc. The PTO machinery is not presented in the figures. The reciprocating motion or shorter only motion of the flap 5 and pivot shaft 5b is a back and forth rotating motion.

The reciprocating panel 5 oscillates on the base 4 back and forth with the movement of seawater for recovering kinetic energy like wave energy of seawater. At the production site the base 4 is mounted onto the bottom of the sea. On the base 4 there are at least two or possibly more supporting legs 5a that are fastened onto the base 4 so that at least one supporting leg 5a is situated at each end side of the flap 5. At its upper end each supporting leg 5a supports an essentially horizontal, back and forth rotating pivot shaft 5b on which the flap 5 is mounted at its lower edge so that the flap 5 can make a reciprocating motion along the movement of the seawater, for instance along the movement of waves. The flap 5 and the pivot shaft 5b rotate back and forth together simultaneously and at the same speed of rotation.

Besides capturing and converting wave energy the actuating mechanism 1 is preferably arranged to act as an artificial reef serving a substrate for sea plants and serving shelters for sea animals. For that purpose preferably at least the base 4 has been equipped with various spaces 9 such as holes, pockets or cavities for sea plants to adhere to the substrate and for sea animals to hide. Sea plants and sea animals are also called the marine growth.

The flap 5 of the actuating mechanism 1 comprises two different parts one above the other when the flap 5 is in upright position. The lowermost part 6 is a primary flap part and the uppermost part 7 is a secondary flap part. The primary flap part 6 can be substantially a plate like element that is covered with a material that prevents water going through. In an advantageous embodiment of the invention the primary flap part 6 comprises a frame covered by sea plants and some sea animals like shells or alike. In this embodiment the covering material is organic and naturally renewable material.

The secondary flap part 7 is arranged to be moved telescopically in relation to the primary flap part 6 in order to vary the total height of the flap 5. The actuating mechanism 1 comprises activating means to move the secondary flap part 7 inwards toward the primary flap part 6 and outwards from the primary flap part 6. The outmost part of the secondary flap part 7 is preferably hollow comprising an adjustable amount of gas such as air in order to give sufficiently buoyancy to the flap 5.

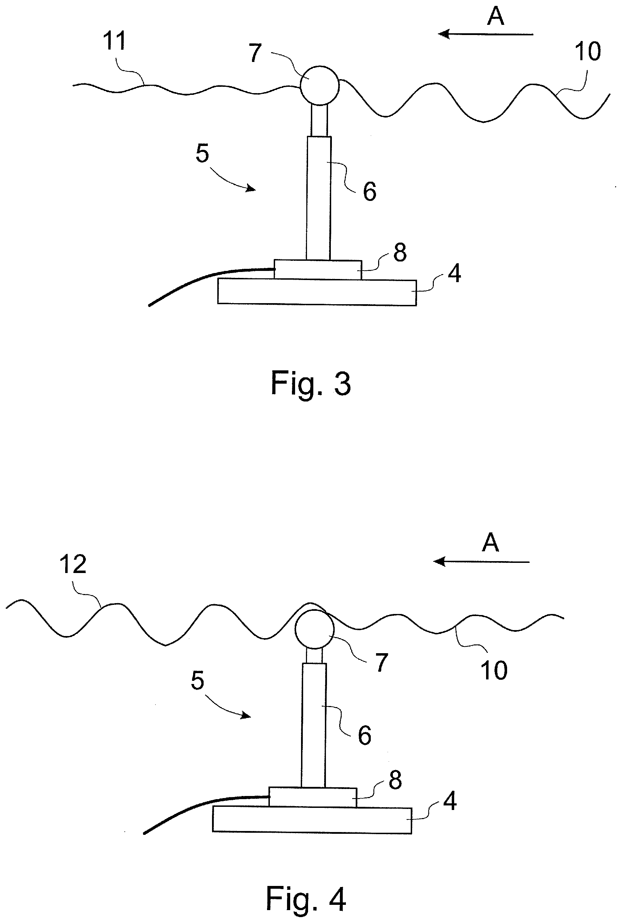

Figure 3 presents in a side view and in a simplified and diagrammatic way a actuating mechanism 1 used in the arrangement according to the invention to make such an impact on the water area surrounding the arrangement which impact advantageously transforms waves passing the arrangement. In this task the actuating mechanism 1 and/or a group of appropriately placed actuating mechanisms1 act as a wave transformer by making large and irregular waves 10 coming from the open sea smoother, weaker and more regular waves 11 and/or changing the direction of travel of the waves.

When transforming waves 10 coming from the open sea the upper edge of the flap 5 is advantageously placed onto the surface of the water or preferably somewhat above the surface of the water. When transforming the waves, the waves can be dampened, the waves can be made better in their quality to be more suitable for the shoreline, the waves can be destroyed or their direction of travel can be changed or the waves can be divided into smaller parts.

The impact for transforming waves can be advantageously given, for example by the flap 5 powered by the PTO unit 8 so that the flap 5 resists the wave power in a proper relation and a right timing. The wave can be destroyed advantageously by using the PTO unit 8 and the flap 5 to reflect such a counter phase wave that destroys the coming wave. The coming waves can also be transformed by spring dampening mechanisms installed into the actuating mechanisms1 or by a heavy mass or by an appropriate form.

Figure 4 presents in a side view and in a simplified and diagrammatic way a actuating mechanism 1 used in the arrangement according to the invention to provide appropriate waves 12 for surfing. In this task the actuating mechanism 1 and/or a group of appropriately placed actuating mechanisms1 act as a wave transformer by giving an impact to make small waves 10 coming from the open sea bigger and better suitable waves 12 for surfing. When transforming smaller waves 10 coming from the open sea into larger waves 12 for surfing the flap 5 is advantageously completely below the surface of the water and is arranged to transform coming waves 10 larger by using the energy from the PTO 8 to reciprocate the flap 5. If the surface of the water is totally calm or almost calm the reciprocating motion of the flap 5 or a group of flaps 5 arouses sufficient waves 12 for surfing.

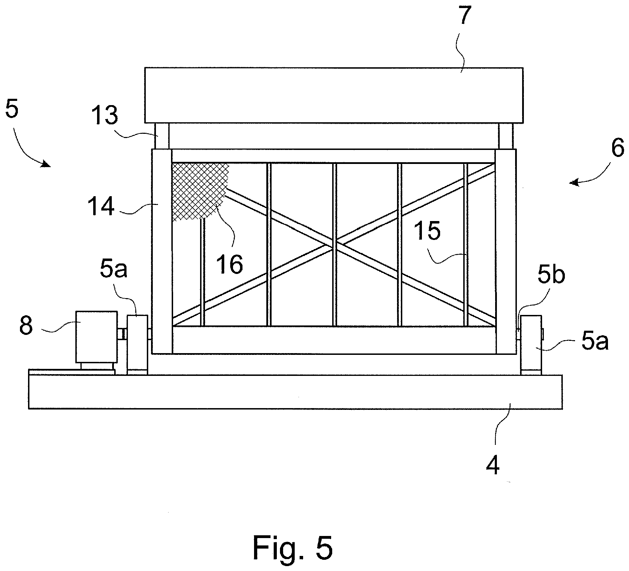

Figure 5 presents in a front view and in a simplified and diagrammatic way a actuating mechanism 1 used in the arrangement according to the invention. In this advantageous embodiment of the invention the primary flap part 6 of the flap 5 comprises a supporting frame covered by sea plants and some sea animals like shells or alike. In this embodiment the covering material is organic and naturally renewable material. In figure 5 the primary flap part 6 is presented without the organic covering material.

The primary flap part 6 of the flap 5 is advantageously substantially rectangular with the supporting frame that comprises a strong support structure 14 with horizontal lower and upper beams and vertical side beams. The area between the horizontal and vertical beams comprises advantageously appropriate gripping elements such as a lattice structure 15 or alike and a netlike covering element 16 or alike to make the surfaces of the primary flap part 6 easy for the sea plants and/or sea animals to adhere to the primary flap part 6. In this kind of a bioflap or biopanel appropriate marine growth such as sea plants and/or sea animals form a sufficiently dense wall on the both sides of the primary flap part 6.

The organic portion of the primary flap part 6 is naturally renewable and forms a self-protecting or auto-protecting function for the actuating mechanism 1. In case of a strong storm, the storm may tear sea plants and/or sea animals apart from the primary flap part 6. In that case the power of the water against the flap 5 diminishes and the protection against the storm is automatically functioning. After the storm new sea plants and/or sea animals adhere to the primary flap part 6 and form new organic walls for the flap 5.

It is obvious to the person skilled in the art that the invention is not restricted to the examples described above but that it may be varied within the scope of the claims presented below. Thus, for example, the structure of the arrangement can be different from what is presented.

## Claims

1. Arrangement for enhancing conditions of various types in a coastal area comprising one or more actuating mechanisms (1) capturing energy from waves and/or tide and converting captured energy to another form of energy and/or producing unsalted water, the actuating mechanism (1) comprising at least a base (4), on which a reciprocating flap (5) is installed by the help of at least a pivot shaft (5b) and at least one actuating mechanism (1) of the arrangement is arranged to make an impact on the water area surrounding the arrangement, and the reciprocating flap (5) of the actuating mechanism (1) comprises a water-permeable primary flap part (6) for marine growth to adhere and to form a partly or totally impermeable organic covering for the flap (5), **characterized in that** the primary flap part (6) comprises gripping elements (15) and netlike covering element (16) suitable for marine growth to adhere to form said partly or totally impermeable organic covering for the flap (5).

2. Arrangement according to claim 1, **characterized in that** the organic covering of the primary flap part (6) is naturally renewable and forms a self-protecting or auto-protecting function for the actuating mechanism (1).

3. Arrangement according to claim 1 or 2, **characterized in that** at least a part of the actuating mechanisms (1) of the arrangement is arranged to act as a breakwater.

4. Arrangement according to claim 1 or 2, **characterized in that** at least a part of the actuating mechanisms (1) of the arrangement is equipped with a pump mechanism and water pipes to move pure water from the deeper water area to shallower water area, or to form one or more fountains into the water area surrounding the arrangement.

5. Arrangement according to claim 1 or 2, **characterized in that** at least a part of the actuating mechanisms (1) of the arrangement is arranged to give an impact to the waves (10) coming from an open sea in order to dampen the load of waves towards the shore and surroundings.

6. Arrangement according to claim 1 or 2, **characterized in that** at least a part of the actuating mechanisms (1) of the arrangement is arranged to give an impact to the waves (10) coming from an open sea in order to transform waves of irregular shapes into waves of a more regular shape.

7. Arrangement according to claim 1 or 2, **characterized in that** at least a part of the actuating mechanisms (1) of the arrangement is arranged to give an impact to the waves (10) coming from an open sea in order to change the direction of travel of the waves.

8. Arrangement according to claim 1 or 2, **characterized in that** at least a part of the actuating mechanisms (1) of the arrangement is arranged to provide waves (12) for surfing.

9. Arrangement according to any of the claims above, **characterized in that** at least a part of the actuating mechanisms (1) of the arrangement is arranged to convert the electric energy produced from the wave energy into an appropriate level in order to use the converted electricity to reduce or remove the concentration of PCB in the bottom of the surrounding water area.

10. Arrangement according to any of the claims above, **characterized in that** at least a part of the actuating mechanisms (1) of the arrangement is equipped to produce pressurized hydrogen and/or oxygen.

11. Arrangement according to any of the claims above, **characterized in that** at least a part of the actuating mechanisms (1) of the arrangement is equipped to produce a warning signal to warn an object moving near the arrangement either under or above the water surface.

12. Arrangement according to any of the claims above, **characterized in that** the primary flap part (6) comprises a supporting frame (14) and gripping elements (15, 16) for marine growth to adhere.

13. Arrangement according to any of the claims above, **characterized in that** the base (4) comprises spaces (9) such as holes, pockets, cavities and/or hollow areas for sea animals and sea plants to use.

14. Method for enhancing conditions of various types in a coastal area comprising one or more actuating mechanisms (1) capturing energy from waves and/or tide and converting captured energy to another form of energy and/or producing unsalted water, the actuating mechanism (1) comprising at least a base (4), on which a reciprocating panel (5) is installed by the help of at least a pivot shaft (5b) and one or more actuating mechanisms (1) capturing energy from waves and/or tide and converting captured energy to another form of energy and/or producing unsalted water is arranged to perform one or more additional tasks by placing one or more actuating mechanism (1) into appropriate location for the task or equipping one or more actuating mechanism (1) with one or more appropriate accessory, and the reciprocating flap (5) of the actuating mechanism (1) comprises a water-permeable primary flap part (6) which adheres marine growth and forms a partly or totally impermeable organic covering for the flap (5) and a self-protecting or auto-protecting function for the actuating mechanism (1), **characterized in that** that the primary flap part (6) comprises gripping elements (15) and a netlike covering element (16) suitable for marine growth to adhere to form said partly or totally impermeable organic covering for the flap (5).

15. Use of the arrangement according to claim 1 and/or the method according to claim 14 to one or more additional tasks for enhancing conditions of various types in a coastal area, **characterized in that** in addition of producing electric energy or fresh water by using wave energy one or more actuating mechanism (1) of the arrangement is used to act as one or more of the following tasks: as a breakwater; as an artificial reef for sea animals and sea plants; as a pump for pumping pure water from deeper areas to the shoreline or pumping water into fountains for entertainment use; as a wave transformer by making waves smoother, weaker and more regular, and by changing the direction of travel of the waves; as a wave producer for surfing; as a PCB remover; as a producer of pressurized hydrogen and/or oxygen; as a bioflap having a substrate for marine growth; as a warning mechanism.

## Patentansprüche

1. Anordnung zum Verbessern von Bedingungen verschiedener Art in einem Küstenbereich, die einen oder mehrere Betätigungsmechanismen (1) umfasst, die eine Energie von Wellen und/oder Gezeiten auffangen und die aufgefangene Energie in eine andere Energieform umwandeln und/oder ungesalzenes Wasser erzeugen, wobei der Betätigungsmechanismus (1) wenigstens eine Basis (4) umfasst, auf der eine hin- und hergehende Klappe (5) mithilfe wenigstens einer Schwenkachse (5b) montiert ist und wenigstens ein Betätigungsmechanismus (1) der Anordnung angeordnet ist, um einen Aufschlag auf den Wasserbereich zu machen, der die Anordnung umgibt, und die hin- und hergehende Klappe (5) des Betätigungsmechanismus (1) einen wasserdurchlässigen primären Klappenteil (6) zum Anhaften eines Meeresbewuchses und zum Ausbilden einer teilweise oder vollständig undurchlässigen organischen Abdeckung für die Klappe (5) umfasst, **dadurch gekennzeichnet, dass** der primäre Klappenteil (6) Greifelemente (15) und ein netzartiges Abdeckelement (16) umfasst, das zum Anhaften des Meeresbewuchses geeignet ist, um die teilweise oder vollständig undurchlässige organische Abdeckung für die Klappe (5) auszubilden.

2. Anordnung nach Anspruch 1, **dadurch gekennzeichnet, dass** die organische Abdeckung des primären Klappenteils (6) natürlich erneuerbar ist und eine Selbstschutz- oder automatische Schutzfunktion für den Betätigungsmechanismus (1) ausbildet.

3. Anordnung nach Anspruch 1 oder 2, **dadurch gekennzeichnet, dass** wenigstens ein Teil der Betätigungsmechanismen (1) der Anordnung angeordnet ist, um als ein Wellenbrecher zu fungieren.

4. Anordnung nach Anspruch 1 oder 2, **dadurch gekennzeichnet, dass** wenigstens ein Teil der Betätigungsmechanismen (1) der Anordnung mit einem Pumpmechanismus und Wasserrohren ausgestattet ist, um reines Wasser aus dem tieferen Wasserbereich in einen flacheren Wasserbereich zu bewegen, oder um einen oder mehrere Springbrunnen in den Wasserbereich auszubilden, der die Anordnung umgibt.

5. Anordnung nach Anspruch 1 oder 2, **dadurch gekennzeichnet, dass** wenigstens ein Teil der Betätigungsmechanismen (1) der Anordnung angeordnet ist, um den Wellen (10) einen Aufschlag zu verleihen, die von einem offenen Meer kommen, um die Wellenbelastung in Richtung des Ufers und der Umgebung zu bremsen.

6. Anordnung nach Anspruch 1 oder 2, **dadurch gekennzeichnet, dass** wenigstens ein Teil der Betätigungsmechanismen (1) der Anordnung angeordnet ist, um den Wellen (10) einen Aufschlag zu verleihen, die von einem offenen Meer kommen, um Wellen unregelmäßiger Gestalt in Wellen regelmäßigerer Gestalt zu transformieren.

7. Anordnung nach Anspruch 1 oder 2, **dadurch gekennzeichnet, dass** wenigstens ein Teil der Betätigungsmechanismen (1) der Anordnung angeordnet ist, um den Wellen (10) einen Aufschlag zu verleihen, die von einem offenen Meer kommen, um die Bewegungsrichtung der Wellen zu ändern.

8. Anordnung nach Anspruch 1 oder 2, **dadurch gekennzeichnet, dass** wenigstens ein Teil der Betätigungsmechanismen (1) der Anordnung angeordnet ist, um Wellen (12) zum Surfen bereitzustellen.

9. Anordnung nach einem der vorstehenden Ansprüche, **dadurch gekennzeichnet, dass** wenigstens ein Teil der Betätigungsmechanismen (1) der Anordnung angeordnet ist, um die elektrische Energie, die aus der Wellenenergie erzeugt wird, in einen geeigneten Wert umzuwandeln, um die umgewandelte Elektrizität zu verwenden, um die PCB-Konzentration in dem Boden des umgebenden Wasserbereichs zu reduzieren oder zu entfernen.

10. Anordnung nach einem der vorstehenden Ansprüche, **dadurch gekennzeichnet, dass** wenigstens ein Teil der Betätigungsmechanismen (1) der Anordnung ausgestattet ist, um unter Druck stehenden Wasserstoff und/oder Sauerstoff zu erzeugen.

11. Anordnung nach einem der vorstehenden Ansprüche, **dadurch gekennzeichnet, dass** wenigstens ein Teil der Betätigungsmechanismen (1) der Anordnung ausgestattet ist, ein Warnsignal zu erzeugen, um ein Objekt zu warnen, das sich nahe der Anordnung entweder unter oder über der Wasseroberfläche bewegt.

12. Anordnung nach einem der vorstehenden Ansprüche, **dadurch gekennzeichnet, dass** das primäre Klappenteil (6) einen Tragrahmen (14) und Greifelemente (15, 16) zum Anhaften des Meeresbewuchses umfasst.

13. Anordnung nach einem der vorstehenden Ansprüche, **dadurch gekennzeichnet, dass** die Basis (4) Räume (9) wie etwa Löcher, Taschen, Hohlräume und/oder hohle Bereiche für Meerestiere und Meerespflanzen zur Verwendung umfasst.

14. Verfahren zum Verbessern von Bedingungen verschiedener Art in einem Küstenbereich, das einen oder mehrere Betätigungsmechanismen (1) umfasst, die Energie von Wellen und/oder Gezeiten auffangen und die aufgefangene Energie in eine andere Energieform umwandeln und/oder ungesalzenes Wasser erzeugen, wobei der Betätigungsmechanismus (1) wenigstens eine Basis (4) umfasst, auf der eine hin- und hergehende Platte (5) mithilfe wenigstens einer Schwenkachse (5b) montiert ist und ein oder mehrere Betätigungsmechanismen (1), die Energie aus Wellen und/oder Gezeiten auffangen und die aufgefangene Energie in eine andere Energieform umwandeln und/oder ungesalzenes Wasser erzeugen angeordnet sind, um eine oder mehrere zusätzliche Anwendungen durch Platzieren eines oder mehrerer Betätigungsmechanismen (1) in eine geeignete Stelle für die Anwendung oder Ausstatten eines oder mehrerer Betätigungsmechanismen (1) mit einem oder mehreren geeigneten Zubehören durchzuführen, und die hin- und hergehende Klappe (5) des Betätigungsmechanismus (1) einen wasserdurchlässigen primären Klappenteil (6) umfasst, der den Meeresbewuchs anhaftet und eine teilweise oder vollständig undurchlässige organische Abdeckung für die Klappe (5) und eine Selbstschutz- oder automatische Schutzfunktion für den Betätigungsmechanismus (1) ausbildet, **dadurch gekennzeichnet, dass** das primäre Klappenteil (6) Greifelemente (15) und ein netzartiges Abdeckelement (16) umfasst, das zum Anhaften des Meeresbewuchses geeignet ist, um die teilweise oder vollständig undurchlässige organische Abdeckung für die Klappe (5) auszubilden.

15. Verwendung der Anordnung nach Anspruch 1 und/oder des Verfahrens nach Anspruch 14 zu einer oder mehreren zusätzlichen Anwendungen zum Verbessern von Bedingungen unterschiedlicher Art in einem Küstenbereich, **dadurch gekennzeichnet, dass** zusätzlich zum Erzeugen von elektrischer Energie oder Frischwasser durch Verwenden von Wellenenergie, ein oder mehrere Betätigungsmechanismen (1) der Anordnung verwendet werden, um als eine oder mehrere der folgenden Anwendungen zu fungieren: als ein Wellenbrecher; als ein künstliches Riff für Meerestiere und Meerespflanzen; als eine Pumpe zum Pumpen von reinem Wasser aus tieferen Bereichen an die Küstenlinie oder Pumpen von Wasser in Springbrunnen für eine Unterhaltungsverwendung; als ein Wellentransformator durch Glätten, Schwächen und regelmäßiger Machen der Wellen und durch Ändern der Bewegungsrichtung der Wellen; als ein Wellenerzeuger für das Surfen; als ein PCB-Entferner; als ein Erzeuger von unter Druck stehendem Wasserstoff und/oder Sauerstoff; als eine Bioklappe, die ein Substrat für den Meeresbewuchs aufweist; als ein Warnmechanismus.

## Revendications

1. Agencement destiné à améliorer les conditions de divers types dans une zone côtière comprenant un ou plusieurs mécanismes d'actionnement (1) capturant l'énergie provenant des vagues et/ou de la marée et convertissant l'énergie capturée en une autre forme d'énergie et/ou produisant de l'eau non salée, le mécanisme d'actionnement (1) comprenant au moins une base (4), sur laquelle un volet à mouvement alternatif (5) est installé à l'aide d'au moins un arbre de pivotement (5b) et au moins un mécanisme d'actionnement (1) de l'agencement est agencé pour créer un impact sur la zone d'eau entourant l'agencement, et le volet à mouvement alternatif (5) du mécanisme d'actionnement (1) comprend une partie de volet primaire perméable à l'eau (6) permettant à une croissance marine pour adhérer et pour former un revêtement organique partiellement ou totalement imperméable pour le volet (5), **caractérisé en ce que** la partie de volet primaire (6) comprend des éléments de préhension (15) et un élément de couverture en forme de filet (16) adapté pour qu'une croissance marine adhère pour former ledit revêtement organique partiellement ou totalement imperméable pour le volet (5).

2. Agencement selon la revendication 1, **caractérisé en ce que** le revêtement organique de la partie de volet primaire (6) est naturellement renouvelable et forme une fonction de protection autonome ou de protection automatique pour le mécanisme d'actionnement (1).

3. Agencement selon la revendication 1 ou 2, **caractérisé en ce qu'**au moins une partie des mécanismes d'actionnement (1) de l'agencement est agencée pour servir de brise-mer.

4. Agencement selon la revendication 1 ou 2, **caractérisé en ce qu'**au moins une partie des mécanismes d'actionnement (1) de l'agencement est équipée d'un mécanisme de pompe et de conduites d'eau pour déplacer l'eau pure de la zone d'eau plus profonde vers une zone d'eau peu profonde, ou pour former une ou plusieurs fontaines dans la zone d'eau entourant l'agencement.

5. Agencement selon la revendication 1 ou 2, **caractérisé en ce qu'**au moins une partie des mécanismes d'actionnement (1) de l'agencement est agencée pour causer un impact sur les vagues (10) venant d'une eau libre afin d'amortir la charge des vagues vers le rivage et ses environs.

6. Agencement selon la revendication 1 ou 2, **caractérisé en ce qu'**au moins une partie des mécanismes d'actionnement (1) de l'agencement est agencée pour causer un impact sur les vagues (10) venant d'une eau libre afin de transformer des vagues de formes irrégulières en vagues de forme plus régulière.

7. Agencement selon la revendication 1 ou 2, **caractérisé en ce qu'**au moins une partie des mécanismes d'actionnement (1) de l'agencement est agencée pour causer un impact sur les vagues (10) venant d'une eau libre afin de changer la direction de déplacement des vagues.

8. Agencement selon la revendication 1 ou 2, **caractérisé en ce qu'**au moins une partie des mécanismes d'actionnement (1) de l'agencement est agencée pour fournir des vagues (12) pour le surf.

9. Agencement selon l'une quelconque des revendications ci-dessus, **caractérisé en ce qu'**au moins une partie des mécanismes d'actionnement (1) de l'agencement est agencée pour convertir l'énergie électrique produite à partir de l'énergie des vagues en un niveau approprié afin d'utiliser l'électricité convertie pour réduire ou éliminer la concentration de PCB dans le fond de la zone d'eau environnante.

10. Agencement selon l'une quelconque des revendications ci-dessus, **caractérisé en ce qu'**au moins une partie des mécanismes d'actionnement (1) de l'agencement est équipée pour produire de l'hydrogène et/ou de l'oxygène sous pression.

11. Agencement selon l'une quelconque des revendications ci-dessus, **caractérisé en ce qu'**au moins une partie des mécanismes d'actionnement (1) de l'agencement est équipée pour produire un signal d'avertissement pour avertir un objet se déplaçant à proximité de l'agencement soit sous, soit au-dessus de la surface de l'eau.

12. Agencement selon l'une quelconque des revendications ci-dessus, **caractérisé en ce que** la partie de volet primaire (6) comprend un cadre de support (14) et des éléments de préhension (15, 16) pour l'adhérence de la végétation marine.

13. Agencement selon l'une quelconque des revendications ci-dessus, **caractérisé en ce que** la base (4) comprend des espaces (9) tels que des trous, des poches, des cavités et/ou des zones creuses pour l'utilisation d'animaux marins et de plantes marines.

14. Procédé destiné à améliorer les conditions de divers types dans une zone côtière comprenant un ou plusieurs mécanismes d'actionnement (1) capturant l'énergie provenant des vagues et/ou de la marée et convertissant l'énergie capturée en une autre forme d'énergie et/ou produisant de l'eau non salée, le mécanisme d'actionnement (1) comprenant au moins une base (4), sur laquelle un panneau à mouvement alternatif (5) est installé à l'aide d'au moins un arbre de pivotement (5b) et un ou plusieurs mécanismes d'actionnement (1) capturant l'énergie provenant des vagues et/ou de la marée et convertissant l'énergie capturée en une autre forme d'énergie et/ou la production d'eau non salée est conçue pour effectuer une ou plusieurs tâches supplémentaires en plaçant un ou plusieurs mécanismes d'actionnement (1) dans un emplacement approprié pour la tâche ou en équipant un ou plusieurs mécanismes d'actionnement (1) d'un ou de plusieurs accessoires appropriés, et le volet à mouvement alternatif (5) du mécanisme d'actionnement (1) comprend une partie de volet primaire perméable à l'eau (6) qui adhère à une croissance marine et forme un revêtement organique partiellement ou totalement imperméable pour le volet (5) et une fonction de protection autonome ou de protection automatique pour le mécanisme d'actionnement (1), **caractérisé en ce que** la partie de volet primaire (6) comprend des éléments de préhension (15) et un élément de couverture en forme de filet (16) adapté pour qu'une croissance marine adhère pour former ledit revêtement organique partiellement ou totalement imperméable pour le volet (5).

15. Utilisation de l'agencement selon la revendication 1 et/ou du procédé selon la revendication 14 à une ou plusieurs tâches supplémentaires pour améliorer les conditions de divers types dans une zone côtière, **caractérisée en ce qu'**en plus de produire de l'énergie électrique ou de l'eau douce en utilisant l'énergie des vagues, un ou plusieurs mécanismes d'actionnement (1) de l'agencement sont utilisés pour remplir une ou plusieurs des tâches suivantes : comme brise-mer; comme récif artificiel pour les animaux marins et les plantes marines ; comme pompe servant à pomper de l'eau pure des zones plus profondes vers le rivage ou servant à pomper de l'eau dans des fontaines à des fins de divertissement ; comme transformateur d'ondes en rendant les ondes plus douces, plus faibles et plus régulières, et en changeant la direction de déplacement des ondes ; comme producteur de vagues pour le surf ; comme décapant de PCB ; comme producteur d'hydrogène et/ou d'oxygène sous pression ; comme bioflap ayant un substrat pour une croissance marine ; comme mécanisme d'avertissement.
